# EUROPEAN PATENT APPLICATION

(11) **EP 1 936 579 A2**
(43) Date of publication of application: **25.06.2008**
(21) Application number: 07121787.1
(22) Date of filing: 28.11.2007
(51) Int. Cl.: G08C 19/00

(54) **System for connecting a sensor to a controller**

(30) Priority: 22.12.2006 US 876900 P
(71) Applicant: Delphi Technologies, Inc., Troy, Michigan 48007 (US)
(72) Inventor: Disser, Robert J., Dayton, OH 45419 (US); Degoul, Paul, 75014, Paris (FR)
(74) Representative: Denton, Michael John

(57) **Abstract**

A sensor to controller connection system including a power source, a controller in communication with the power source, and a sensor in communication with the power source and the controller, the sensor including sensor electronics and a current source, the current source having a control input and an output, the control input being applied by the sensor electronics and the output being applied to the controller, wherein the current source controls an electric signal communicated to the controller from the sensor based upon the control input.

## Description

### TECHNICAL FIELD

The present application claims priority from U.S. Ser. No. 60/876,900 filed on December 22, 2006, the entire contents of which are incorporated herein by reference.

### BACKGROUND OF THE INVENTION

The present application relates to systems for connecting remote sensors to electronic controllers and, more particularly, to systems for connecting remote sensors to electronic controllers having a single wire connection and improved signal to noise immunity.

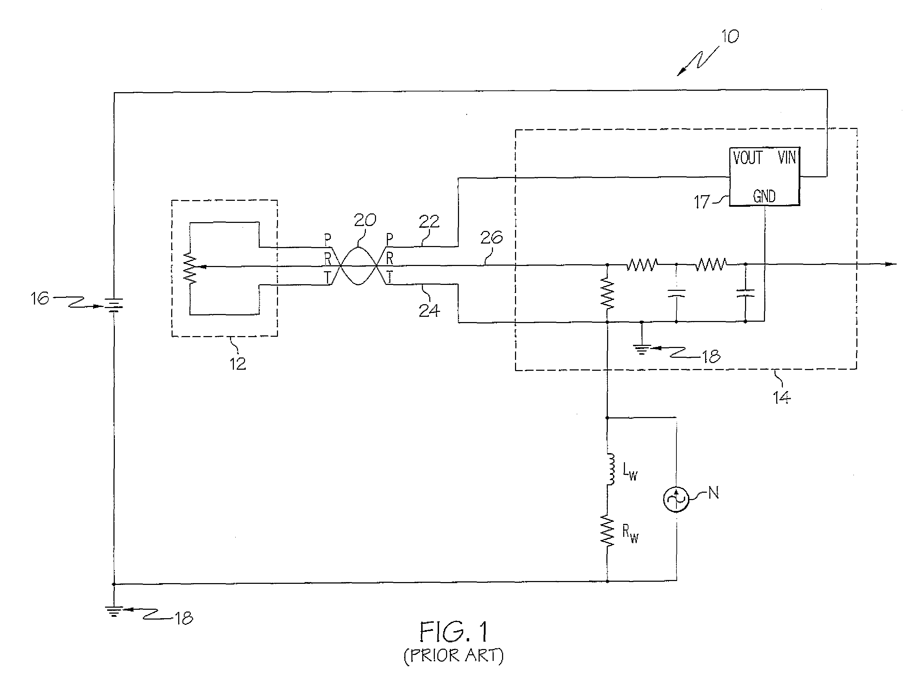

Referring to Fig. 1, a typical prior art sensor to controller connection system, generally designated **10,** includes a remote sensor **12,** an electronic controller **14** and a battery **16** and is connected to ground **18.** The wiring inductance **L_{W},** wiring resistance **R_{W}** and current noise source **N** of the system **10** represent ground noise created by transient currents in the ground path of the controller **14.** For example, a controller powering a motor load (not shown) may experience ground noise in excess of about 1 V (positive or negative).

The input signal from the sensor **12** to the controller **14** is typically a relatively high impedance signal that does not allow significant current flow and, therefore, is sensitive to noise. For example, an input signal of 0.5 V to the sensor **12** may facilitate a current flow of only about 50 microamps, which is sufficiently low to be subject to ground noise. Therefore, to minimize the ground noise interference with the signal generated by the sensor **12,** a three wire connector **20** (e.g., a three pin connector) is used to supply power, by way of battery **16** and voltage regulator **17,** and ground to the sensor **12** from the controller **14** over first and second wires **22, 24,** while the sensor **12** supplies a signal to the controller **14** over the third wire **26.** Ideally, the three wires **22, 24, 26** are twisted together to minimize external electrical interference.

Thus, the three wire system of Fig. 1 requires increased wiring and connector cost and a significant amount of care to reduce signal noise issues.

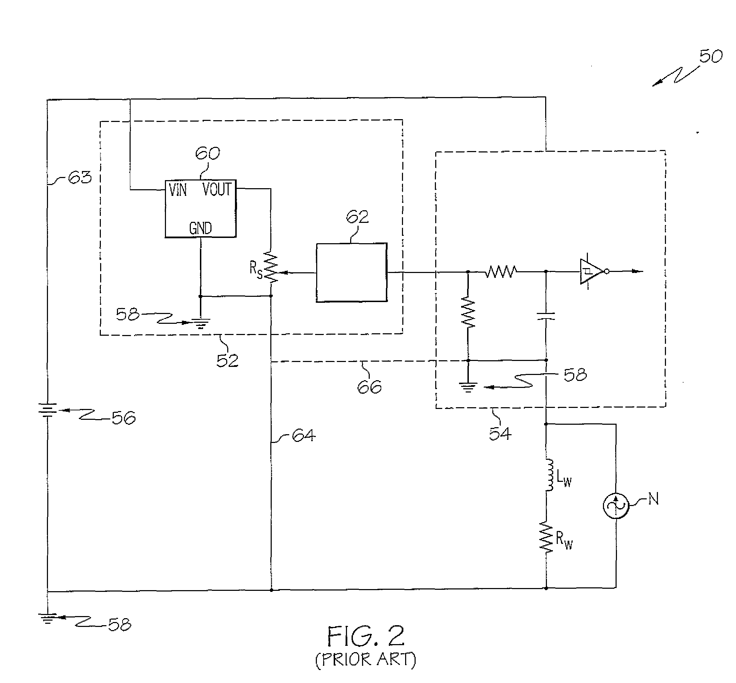

Referring to Fig. 2, a first alternative prior art sensor to controller connection system, generally designated **50,** includes a remote sensor **52,** an electronic controller **54** and a battery **56** and is connected to ground **58.** The wiring inductance **L_{W},** wiring resistance **R_{W}** and current noise source **N** of the system **50** represent ground noise created by transient currents in the ground path of the controller **54.**

The sensor **52** includes a voltage regulator **60** and a pulse width modulation ("PWM") generator **62** and may be directly connected to the battery **56** and ground **58** (e.g., by way of lines **63, 64,** respectively). The voltage regulator **60** regulates the battery voltage to the desired output voltage **V_{OUT},** thereby applying the proper voltage to the potentiometer **R_{S}** of the sensor **52.** The PWM generator **62** converts the analog sensor signal from the potentiometer **R_{S}** to a pulse width modulated signal and communicates the pulse width modulated sensor signal to the controller **54.** The duty cycle of the pulse width modulated sensor signal is proportional to the value of the analog sensor signal value.

Thus, the connection between the sensor **52** and the controller **54** may be a single wire. Alternatively, as shown by broken line **66,** the sensor **52** may be connected to ground **58** by way of a second wire connection between the sensor **52** and the controller **54,** thereby requiring two wires between the sensor **52** and the controller **54.** Nonetheless, with either a one or two wire connection, design consideration must be given to valid signal voltages such that the signal is guaranteed to be received even in the event of large ground noise transients. Furthermore, a second design consideration requires that the input interface circuit in the controller must not adjust the PWM duty cycle of the sensor signal prior to a microprocessor reading the signal and a third design consideration is the amount of microprocessor throughput which must be used to calculate the PWM duty cycle. Still furthermore, many microprocessors must receive an interrupt at each edge of the pulse width modulated sensor signal to calculate the duty cycle of the signal. Therefore, to transmit a higher bandwidth signal, the PWM frequency must also be higher, which increases the number of microprocessor interrupts and increases the microprocessor throughput utilized to calculate the PWM duty cycle.

A second alternative prior art sensor to controller connection system (not shown) is a single wire signal solution that sources a current between 4 mA and
20 mA proportional to the linear signal, wherein 4 mA represents no signal and 20 mA represents maximum signal. To provide a signal current of this magnitude requires significant power dissipation in the transistor which supplies the current, which may become cost prohibitive in the automotive environment.

Accordingly, there is a need for a system for communicating a sensor signal between a sensor and a controller having improved signal to noise immunity and a single wire or pin connection between the sensor and the controller.

### SUMMARY OF THE INVENTION

In one aspect, the disclosed sensor to controller connection system may include a power source, a controller in communication with the power source, and a sensor in communication with the power source and the controller, the sensor including sensor electronics and a current source, the current source having a control input and an output, the control input being applied by the sensor electronics and the output being applied to the controller, wherein the current source controls an electric signal communicated to the controller from the sensor based upon the control input.

In another aspect, the disclosed sensor to controller connection system may include a battery, a controller in communication with the battery, and a sensor in communication with the controller by way of a single wire connection, the sensor including sensor electronics, a current source and a voltage regulator, the voltage regulator being in communication with the battery and the current source, the current source having a control input and an output, wherein the control input includes a voltage applied by the sensor electronics, and wherein the output controls an electric current communicated to the controller from the sensor.

Other aspects of the disclosed system for connecting a sensor to a controller will become apparent from the following description, the accompanying drawings and the appended claims.

### BRIEF DESCRIPTION OF THE DRAWINGS

Fig. 1 is a schematic illustration of a first prior art sensor to controller connection system;

Fig. 2 is a schematic illustration of a second prior art sensor to controller connection system;

Fig. 3 is a schematic illustration of a first aspect of the disclosed system for connecting a sensor to a controller; and

Fig. 4 is a schematic illustration of a sensor according to a second aspect of the disclosed system for connecting a sensor to a controller.

### DESCRIPTION OF THE PREFERRED EMBODIMENTS

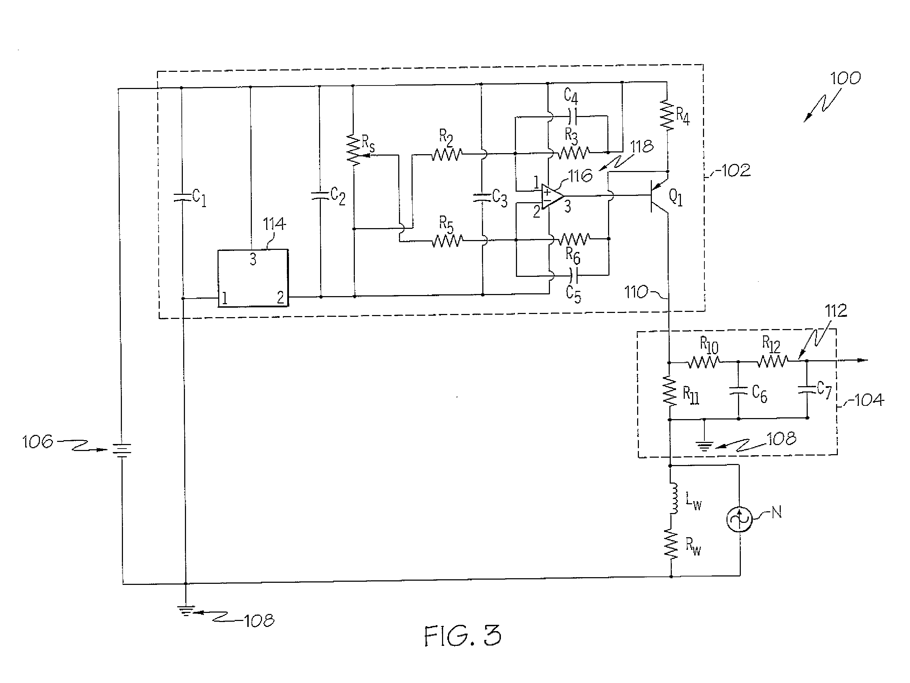

Referring to Fig. 3, one aspect of the disclosed system for connecting a sensor to a controller, generally designated **100,** may include a sensor **102,** an electronic controller **104** and a power source **106,** such as a battery (e.g., a 12 V automotive battery). The system **100** may be connected to ground **108,** such as a vehicle chassis. The wiring inductance **L_{W},** wiring resistance **R_{W}** and current noise source N of the system **100** may represent ground noise created by transient currents in the ground path of the controller **104.**

In one aspect, sensor **102** may be a pedal feel emulator (not shown) that indicates a driver's brake request and the controller 104 may be associated with a front right electric caliper (not shown) and may generate and communicate a braking signal to the caliper based upon signals received from the pedal feel emulator.

The controller **104** may include resistors **R₁₀, R₁₁, R₁₂** and capacitors **C₆, C₇.** The input to the controller **104** from the sensor **102** may be in the form of a single wire **110** that supplies a current. For example, a single pin connector may be used to connect the sensor **102** to the controller **104.** The use of a single wire connection between the sensor **102** and the controller **104** may provide several advantages, including reduced costs and manufacturing time. The current supplied by the wire **110** may be converted to a signal voltage by resistor **R₁₁,** which may be filtered by a low pass filter **112** created by resistors **R₁₀, R₁₂** and capacitors **C₆, C₇.** The low pass filter **112** may eliminate signal noise and may provide an anti-aliasing filter.

The sensor 102 may include a potentiometer **R_{S},** resistors **R₂, R₃, R₄, R₅, R₆,** capacitors **C₁, C₂, C₃, C₄, C₅,** a transistor **Q₁,** a voltage regulator **114** and an integrated circuit **116.** The potentiometer **R_{S}** may represent the sensor function of
the sensor **102** and may be capable of supplying a voltage corresponding to a sensor input (e.g., pedal travel). However, those skilled in the art will appreciate that sensor 102 may have various sensor inputs. The integrated circuit **116,** resistors **R₂, R₃, R₅, R₆** and capacitors **C₄, C₅** may form a differential amplifier, generally designated **118.** The differential amplifier 118 and the transistor **Q₁** may function as a current source.

The voltage regulator **114** of the sensor **102** may be connected to the positive terminal of the power source **106** at pin **3** of the regulator **114** and to ground **108** at pin **1** of the regulator **114.** For example, the power source **106** may apply 12 V to the sensor **102** and the voltage regulator **114** may regulate the applied voltage to 5 V. The regulated output voltage (pin 2) from the regulator **114** may be applied to the potentiometer **R_{S}** and the first input (pin **1**) of the amplifier **118.** The output of the potentiometer **R_{S}** may be applied to the second input (pin **2**) of the amplifier **118.** The resulting output (pin 3) of the amplifier **118** may control the transistor **Q₁,** thereby regulating the current output to the controller **104** by way of line **110.**

In one aspect, unlike conventional sensors that operate from 0 V to 5 V, sensor **102** may operate from 7 V to 12 V with respect to ground **108.** The standard acceptable automotive battery voltage range is 9 V to 16 V. For example, when the power source **106** is a battery sourcing 16 V, the sensor **102** may operate between 11 V and 16 V with respect to ground **108.** When the battery **106** is sourcing 9 V, the sensor **102** may operate between 4 V and 9 V with respect to ground **108.** Many automotive manufactures prefer electronic controllers to operate down to a controller voltage of 7 V to account for the transient ground noise. Therefore, to provide a valid signal, transistor **Q₁** may source current to the controller **104** and remain in the active linear conduction range which requires a collector emitter voltage of greater than 0.5 V. When the maximum voltage across resistor **R₄** is designed to be 1 V, the output voltage of the sensor **102** may be within 1.5 V of the positive battery voltage and the maximum signal generated across resistor **R₁₁** in the controller is 5 V. With 1.5 V across the sensor output and 5 V across the controller signal input, the sensor system **100** can operate with a minimum battery voltage of 6.5 V. As the battery
voltage rises above 6.5 V, the transistor **Q₁** remains in the active linear conduction range, thereby increasing the power dissipation of transistor **Q₁.**

For cost considerations, the use of small signal transistors instead of power transistors may be preferred. To allow the use of small signal transistors, the maximum current sourced by the sensor interface electronics should be controlled to maintain acceptable power dissipation in transistor **Q₁** under maximum battery voltage conditions. To maintain a power dissipation of 50 mW in transistor **Q₁** with a 16 V battery, the maximum current that transistor **Q₁** can source is 5 mA. Under this system condition, 1 V across resistor **R₄** in the sensor interface electronics and 5 V across resistor **R₁₁** in the controller leaves 10 V across transistor **Q₁.**

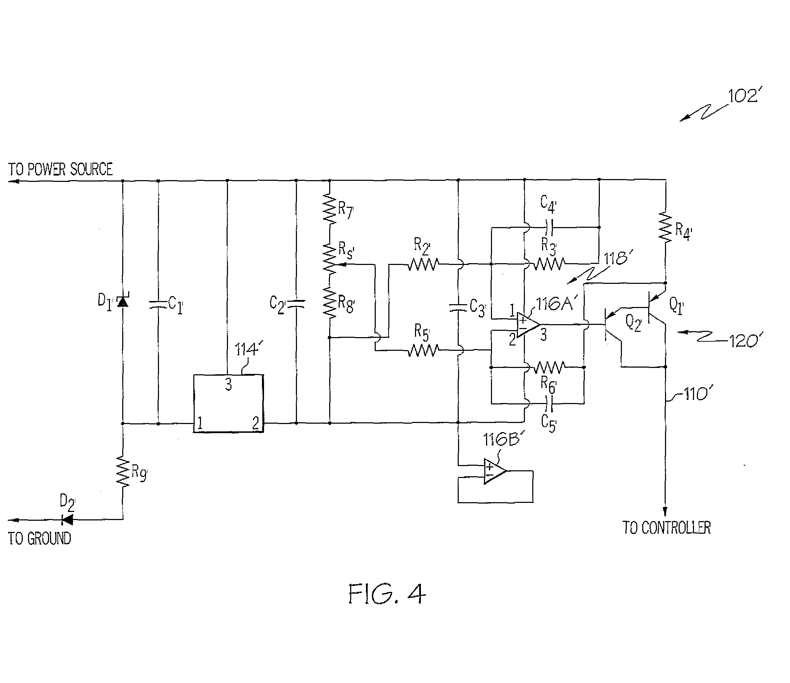

Referring to Fig. **4****,** one specific aspect of a sensor, generally designated **102',** useful with the system **100** of Fig. 3 may include a potentiometer **R_{S}',** resistors **R₂', R₃', R₄', R₅', R₆', R₇', R₈', R₉',** capacitors **C₁', C₂', C₃', C₄', C₅',** transistors **Q₁', Q₂',** diodes **D₁', D₂',** a voltage regulator **114'** and amplifiers 116A', 116B' associated with integrated circuit. Amplifier **116B'** may be unused. Diode **D₂'** may provide reverse voltage protection for the sensor **102'** and diode **D₁'** and resistor **R₉'** may provide input voltage transient protection for standard automotive voltage transients. Capacitor **C₁'** may filter the input battery supply.

The sensor function of the sensor **102'** may be represented by resistors **R₇', R₈'** and potentiometer **R_{S}'.** For diagnostic reasons, many automotive sensors provide an output of 0.5 V for a signal representing a zero value and an output of 4.5 V for a signal representing the maximum value. Resistors **R₇', R₈'** provide enough voltage offset such that the full range of potentiometer **R_{S}'** is 0.5 V to 4.5 V. At this point, those skilled in the art will appreciate that the actual sensor may be a position sensor, a force sensor, an acceleration sensor or the like and resistors **R₇', R₈'** and potentiometer **R_{S}'** have only been used to generally represent sensor electronics.

In one aspect, the voltage regulator **114'** may be connected to the positive input of a power source (e.g., power source **106** in Fig. 3) at pin **3** of the regulator **114'** and to ground (e.g., ground 108 in Fig. 3) at pin **1** of the regulator **114'** such that the regulator **114'** may receive a negative input voltage with respect to the regulator ground pin 3. The voltage output (pin 2) of the regulator **114'**
may deliver a regulated output voltage that is, for example, 5 V below the regulator ground pin 3. This regulated voltage may become the common voltage for the sensor **102'** and associated interface electronics. For example, the regulated voltage may be about 4 V to 11 V above the vehicle chassis ground depending upon the battery voltage input. The positive battery input voltage may become the regulated +5 V above the sensor common voltage for the sensor and interface electronics. For the purpose of this description, this voltage will be referred to as +5 V although the actual voltage value is equal to the positive battery voltage with respect to ground. Capacitor **C₂'** may filter the output of the 5 V sensor power supply. Capacitor **C₃'** may filter the sensor supply locally at the power pins of amplifier **116A'.** Therefore, in one aspect, the sensor **102' may** convert a 0 V to 5 V sensor input into a 0 mA to 5 mA sensor signal.

The amplifier **116A',** resistors **R₂', R₃', R₅', R₆'** and capacitors **C₄', C₅'** may form a differential amplifier, generally designated **118'.** In one aspect, the value of resistor **R₂'** may equal the value of resistor **R₅',** the value of resistor **R₃'** may equal the value of resistor **R₆'** and the value of capacitor **C₄'** may equal the value of capacitor **C₅',** such that the gain of the differential amplifier **118'** may be defined by the ratio of resistor **R₃'** to resistor **R₂'.** For example, resistor **R₃'** may have a resistance of 49,900 Ohms and resistor **R₂'** may have a resistance of 249,000 Ohms, resulting in a gain of the differential amplifier **118'** of about 0.2 (49,900/249,000). Therefore, in one example, the differential amplifier **118'** may provide an output voltage that is equal to 0.2 times the input voltage.

The output voltage (pin 3) from the differential amplifier **118'** may be converted to a sensor output current by the transistors **Q₁', Q₂'** and the sensor output current may be supplied to the controller (Fig. 3) by line **110'.** Transistors **Q₁', Q₂'** may be configured as a Darlington transistor pair **120',** which may be two individual transistors or a single transistor package designed specifically as a Darlington transistor. The collectors of transistors **Q₁', Q₂'** may be the output current source of the sensor **102'** to the controller (Fig. 3). The Darlington transistor configuration **120'** may be used since the collector current of a transistor equals the emitter current minus the base current. Therefore, the Darlington transistor configuration **120'** may increase the gain of the transistors **Q₁', Q₂'** such that the base current is very small with respect to the emitter current. Therefore,
the emitter current and collector current are very nearly equal. Resistor **R₄'** may be configured to sense and ultimately control the emitter current of transistor **Q₁'.**

The output voltage from the potentiometer **Rₛ'** (e.g., between 0.5 and 4.5 V) may be applied to pin 2 of the differential amplifier **118'.** As discussed above, the sensor output voltage range may be, for example, between 0.5 and 4.5 V and, therefore, the input voltage to the differential amplifier **118' may** be, for example, between 0.5 and 4.5 V.

If a sensor voltage of zero volts were possible, the output voltage of the differential amplifier **118'** would be zero. However, since resistor **R₃'** is connected to +5 V (with respect to the sensor voltage), the voltage on resistor **R₆'** may be +5 V and the output voltage of the differential amplifier **118'** will be at a voltage near +5V such that transistors **Q₁', Q₂'** are in a non-conducting state. With a sensor voltage of 0.5 V applied to the input voltage (pin 2) of the differential amplifier **118',** the output voltage goes lower in voltage below +5 V. This change in voltage causes the amplifier **116A' to** sink current from the base of transistor **Q₂'.** The emitter of transistor **Q₂'** sinks current from the base of transistor **Q₁'** which causes current flow in the emitter of transistor **Q₁'.** This current flow is sensed by resistor **R₄'** by creating a voltage as the output voltage of the differential amplifier **118'.** The output pin **3** of amplifier **116A'** continues to decrease in voltage until the gain equation (e.g., output voltage = 0.2 X input voltage) of the differential amplifier **118'** is satisfied. For example, the final voltage across resistor **R₄'** with a sensor voltage of 0.5 V is 0.1 V. With the value of resistor **R₄'** at 200 Ohms, the emitter current of transistor **Q₁'** is 500 microamps, for example. Since the collector current of transistors **Q₁', Q₂'** is nearly equal to the emitter current, the sensor and interface electronics source 500 microamps to the controller (Fig. 3). This current is significantly greater than prior art systems, thereby significantly improving the signal to noise immunity. Similarly, with a sensor voltage of 4.5 V as the input voltage to the differential amplifier **118',** the output voltage of the differential amplifier **118'** across resistor **R₄'** is 0.9 V, which, following the example above, sources 4.5 mA to the controller (Fig. 3).

Although various aspects of the disclosed sensor to controller connection system have been shown and described, modifications may occur to those skilled
in the art upon reading the specification. The present application includes such modifications and is limited only by the scope of the claims.

## Claims

1. A sensor to controller connection system comprising:
a power source;
a controller in communication with said power source; and
a sensor in communication with said power source and said controller, said sensor including sensor electronics and a current source, said current source having a control input and an output, said control input being applied by said sensor electronics and said output being applied to said controller, wherein said current source controls an electric signal communicated to said controller from said sensor based upon said control input.

2. The system of claim 1 wherein said power source is a battery.

3. The system of claim 1 wherein said current source includes a differential amplifier and a transistor.

4. The system of claim 1 wherein said controller and said sensor are connected to a negative terminal of said power source.

5. The system of claim 1 wherein said communication between said controller and said sensor is made over a single wire.

6. The system of claim 1 wherein said controller includes a low pass filter adapted to process said electric signal.

7. The system of claim 1 wherein said electric signal is an electric current.

8. The system of claim 1 wherein said sensor electronics includes a potentiometer.

9. The system of claim 1 wherein said sensor further includes a voltage regulator in communication with said power source, said current source and ground.

10. The system of claim 9 wherein said voltage regulator provides a regulated voltage to said sensor and said current source at a voltage potential substantially at a positive terminal of said power source.

11. The system of claim 10 wherein said controller monitors said electric signal at a voltage potential substantially at a negative terminal of said power source.

12. The system of claim 9 wherein said voltage regulator provides a regulated voltage to said sensor and said current source at a voltage potential substantially at a negative terminal of said power source.

13. The system of claim 12 wherein said controller monitors said electric signal at a voltage potential substantially at a positive terminal of said power source.

14. The system of claim 1 wherein said sensor is in direct communication with said power source.

15. A sensor to controller connection system comprising:
a battery;
a controller in communication with said battery; and
a sensor in communication with said controller by way of a single wire connection, said sensor including sensor electronics, a current source and a voltage regulator, said voltage regulator being in communication with said battery and said current source, said current source having a control input and an output, wherein said control input includes a voltage applied by said sensor electronics, and wherein said output controls an electric current communicated to said controller from said sensor.

16. The system of claim 15 wherein said current source includes a differential amplifier and a transistor.

17. The system of claim 15 wherein said controller and said sensor are connected to the negative terminal of said battery.

18. The system of claim 15 wherein said sensor electronics includes a potentiometer.

19. The system of claim 15 wherein said sensor is in direct communication with said voltage regulator.

20. The system of claim 15 wherein said battery includes a positive terminal and a negative terminal and said voltage regulator is connected to said positive terminal.

21. The system of claim 20 wherein said controller monitors said electric current at said negative terminal.

22. The system of claim 15 wherein said battery includes a positive terminal and a negative terminal and said voltage regulator is connected to said negative terminal.

23. The system of claim 22 wherein said controller monitors said electric current at said positive terminal.
